Europäisches Patentamt

European Patent Office

Office européen des brevets

(19)

(11) Publication number: **0 040 107 B1**

# (12) EUROPEAN PATENT SPECIFICATION

(45) Date of publication of patent specification: **14.08.91**   (51) Int. Cl.⁵: **G01F 23/26**

(21) Application number: **81302148.2**

(22) Date of filing: **14.05.81**

(54) Fuel gauging system.

(30) Priority: **14.05.80 US 149772**
**14.05.80 US 149795**
**14.05.80 US 149789**
**14.05.80 US 149790**
**14.05.80 US 149797**
**14.05.80 US 149773**
**14.05.80 US 149796**
**14.05.80 US 149798**

(43) Date of publication of application:
**18.11.81 Bulletin 81/46**

(45) Publication of the grant of the patent:
**14.08.91 Bulletin 91/33**

(84) Designated Contracting States:
**DE FR GB IT NL SE**

(56) References cited:
**US-A- 3 830 090**
**US-A- 4 090 408**

(73) Proprietor: **HONEYWELL INC.**
**Honeywell Plaza**
**Minneapolis Minnesota 55408(US)**

(72) Inventor: **Colby, Dwight D.**
**521 Woodland Drive**
**Roseville Minnesota 55113(US)**
Inventor: **Fahley, Jerome A.**
**5271 Buchanan Street N.E.**
**Fridley Minnesota 55421(US)**
Inventor: **van Dyke, Martin J.**
**8033 Douglas Drive North**
**Brooklyn Park Minnesota 55443(US)**
Inventor: **Leonard, Kenneth L.**
**5709 80th Avenue North**
**Brooklyn Park Minnesota 55443(US)**
Inventor: **Dougherty, William R.**
**3101 Armour Terrace**
**St. Anthony Minnesota 55418(US)**

(74) Representative: **Fox-Male, Nicholas Vincent Humbert**
**Honeywell Control Systems Limited Charles Square**
**Bracknell Berkshire RG12 1EB(GB)**

## Description

The present invention relates to fuel gauging systems, in particular though not exclusively for use in aircraft.

The basic element of fuel gauging systems is the liquid level sensor. A variety of such sensors are known, the most convenient one often being the capacitance sensor, which consists essentially of a pair of long parallel plates projecting down into the tank. The capacitance of the sensor varies with the fuel level.

The basic level sensing system uses, as just noted, a single uniform sensor such as a capacitance sensor which extends generally vertically through the tank. The output signal is directly proportional to the wetted length of the sensor, and this signal is then converted to the liquid volume, e.g. by means of a table look-up if the tank does not have a uniform horizontal section. A modification of this is to use a "characterized" sensor, in which the width of the plates varies along their length, so that the output signal varies uniformly with varying volume in the tank instead of with varying depth.

A variety of known systems show a development wherein a plurality of individual sensors are placed at suitable intervals through the tank and are coupled together. This arrangement can have the effect of simulating a single characterized sensor, e.g. if the tank is "stepped" with one sensor extending down to the step and the other to the bottom of the tank. It can also help to compensate for changes in the orientation of the tank. A cylindrical tank with a sensor extending axially down it will not change its output signal if it is tilted, but an irregular tank will usually change the wetted length of a single sensor if it is tilted. Providing a plurality of sensors spaced through the tank and coupled together has an averaging effect which compensates for tilting; the sensors can be thought of as simulating a single sensor with very wide plates so shaped that tilting of the tank does not change the wetted area.

One example of such a prior art system is United States Patent No. 4,090408 in which there is disclosed a system for automatic compensation for the zero fluid capacitance variation in a tank and automatic adjustment of the fluid full scale reading for variation and fluid tank capacitance in a fuel quantity indicator. This prior invention is directed to a fluid quantity indicator, such as for aviation fuel, of the type utilizing capacitive type sensing probes in which a capacitance change occurs proportionally to the amount of fluid in a tank due to the dielectric constant of the fluid being different from that of air. The system utilizes programmable digital-to-analog converters to provide a universal apparatus full scale set compensation for containers for the fluid substantially independent of the container configuration for compensating for variation in full scale capacitance of a given container. The apparatus further provides a universal apparatus zero set compensation for containers for the fluid substantially independent of the container configuration for compensating for variations in zero fluid capacitance of a given container. The system is inherently capable of providing only a single wetted length measurement.

Another example of a prior art system is US Patent No. 3,830,090 which discloses an electrical measuring apparatus employing analog condition responsive means to operate remote digital indicators. The apparatus measures the weight of fuel in a plurality of tanks on an aircraft. In each tank, there are provided a plurality of capacitors connected so that their impedance varies linearly as an analog function of the volume of the fuel in the tank. A compensating capacitor, totally submerged in the fuel, provides another analog indication that varies with the density of the fuel. These analog indications are transmitted to a master indicator, where they serve as inputs to an analog-to-digital converter. The converter's digital output is the weight of fuel in the tank.

These known arrangements suffer, however, from the disadvantage that the selection of the placing and sizes of the individual sensors to be coupled together as a single sensing means is complicated and dependent to a large extent on the experience and "feel" of the designer.

With such systems, there is a need for high accuracy, combined with a need to minimize mechanical complexity. The object of the present invention is to provide a system which gives increased accuracy without excessive mechanical complexity.

Accordingly the present invention provides a liquid gauging system comprising a tank having therein a plurality of capacitive sensors responsive to the wetted length of the sensors and an additional capacitive sensor being a dielectric compensator characterised by means for sensing the wetted length of each sensor individually, means for determining for each sensor a corresponding partial volume of liquid in dependence on the wetted length of that sensor, and means for adding the partial volumes.

Accordingly the invention provides a variety of features giving an improved fuel gauging system.

The system to be described utilizes capacitance sensors, the sensors being mechanically uniform with the system characterising the sensors (i.e. determining the wetted length to volume function) by means of stored tables. (The system can be retrofitted to tanks having physically characterised sensors, i.e. with plates shaped to match the tank geometry, if desired.) A plurality of sensors are provided in a single tank, and these are sensed individually. A plurality of characterisations are stored for each sensor. The system incorporates dielectric constant measurement, and uses a null balancing technique with successive approximations for capacitance measurement. (This allows high speed operation, which is essential if rapid following a fuel movements in multi-sensor tanks is to be achieved.) The system also incorporates various safety features and checks for malfunction, including two reference components (a resistor and a capacitor), and a contamination monitor. Faulty probes can be detected and their effects compensated for by means of the remaining probes.

A system in accordance with the invention will now be described, by way of example, with reference to the accompanying drawings, in which:

Figure 1 is a diagrammatic view of the tank and probes;

Figure 2 is a general block diagram of the system;

Figure 3 is a more detailed diagram of the empty and full reference channels of the system;

Figure 4 is a circuit diagram of the null sensing circuitry;

Figure 4A is a set of waveforms relating to Figure 4;

Figure 5 is a circuit diagram of the contamination monitor; and Figure 6 is a set of six characterization curves.

## Fuel Tanks and Sensors

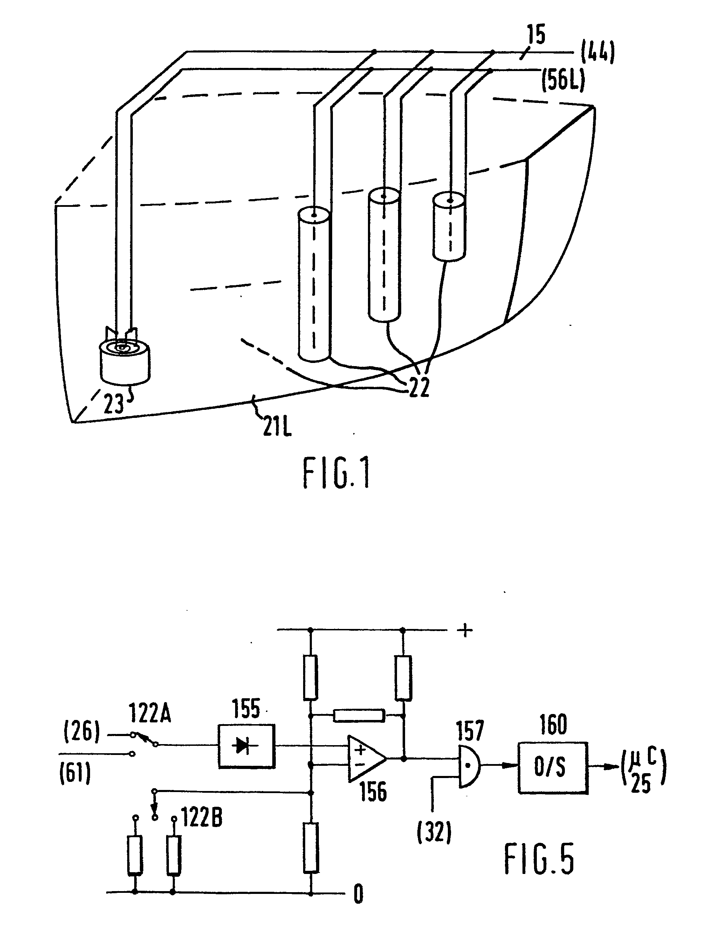

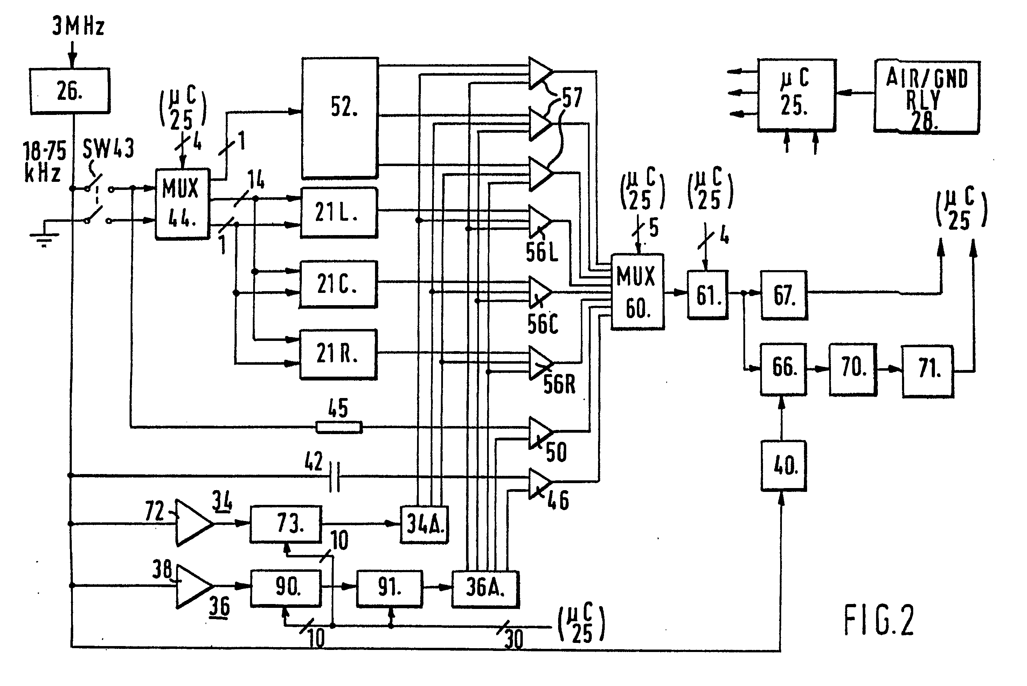

The system to be described is physically resident in an aircraft having 3 fuel tanks, left, right, and centre, 21L, 21R, and 21C (Figure 2). These tanks are physically of complicated shapes which lack short exact geometrical definition. The fuel in any one of them is distributed differently according to whether the aircract is parked on the ground or is in flight, and on the conditions of flight. Each of the 3 tanks has 14 sensors 22 and a dielectric compensator 23 therein. Figure 1 is intended to indicate in symbolic form the left tank 21L with 3 of the 14 sensors 22 and the dielectric compensator 23 shown. As indicated, the tank shape is not simple. The sensors 22 are distributed throughout the tank, each being in the form of a generally vertical tube having a central rod. The compensator 23 is located near the bottom of the tank where it will always be covered by fuel.

In more detail, a probe preferably consists of an outer tube of diameter about 45 mm and an inner hollow rod of diameter about 25 mm, held centrally in the outer tube by suitable insulating spacers. The length of the probe is between 75 and 2000 mm, depending on its intended location in the tank. The ends of the probe are protected by insulating plastic caps, the lower cap having an open end and the upper one having vent holes in its side. The caps protect the probe and prevent it from contacting the top and bottom of the tank, as might happen with flexing of the tank, and the upper cap protects the sensor from the entry of contaminants.

The sensors operate by capacitive sensing, with the fuel flowing up inside the sensors to reach the same level as the fuel around the sensors. The capacitance of a sensor changes linearly with the level of the fuel inside it. The dielectric constant of the fuel is determined with the aid of the dielectric compensator 23, which is located in the tank near the bottom but above the level where water and other contaminants might cause a problem. The system includes means for substituting the most recent valid value of the dielectric constant for the value obtained from the compensator 23 when the fuel level falls to the point where the compensator is not fully covered by fuel. The compensator preferably consists essentially of 4 coaxial tubes, of diameters 25, 45, 65, and 85 mm, and of lengths of the order of 50 mm, to give a substantial capacitance with a short length.

The probes 22 and compensator 23 have individual excitation lines, so that there is a total of 15 lines to the probes and compensator from a multiplexer 44, as indicated in Figure 1, and they have a common return line which leads to an amplifier, 56L, as indicated in Figure 1. The 15 supply lines are common to all 3 tanks, but each tank has its own amplifier.

## General Electronics

Figure 2 is a general block diagram of the system. The 3 tanks 21L, 21C, and 21R are surrounded by electronics which may generally be regarded as analog-to-digital electronics, and this electronics is coupled to a microcomputer 25 by a number of buses and lines. The electronics operates to sense the capacitances of the sensors or probes 22 in the 3 tanks, process the sensed value to some extent, and convert the value into digital form. The microcomputer 25 carries out further processing to calculate the volumes of fuel in the 3 tanks, and serves also as means for receiving signals or data from an aircraft air/ground relay 28, the signals or data being related to whether the aircraft is in the air or on the ground.

Depending on the requirements of the system, it may be desirable to include more than 1 set of electronics and associated microprocessor, giving for example two independent channels which may either operate redundantly so that each checks the other or may be operated independently with either taking on the functions of the other as well should a failure of one occur.

The 3 tanks each include 14 sensors or probes 22 and a compensator 23. The 3 tanks are selected in sequence by a multiplexer 60, which is fed from 3 current to voltage converters 56L, 56C, and 56R which are fed in turn from the 3 tanks as shown. The multiplexer 60 is controlled from the microcomputer 25, by means of a strobe line, an enable line, and a 3-bit select bus (not shown in detail); the multiplexer 60 has a total of 8 signal inputs, including the 3 from the tanks, as will appear later. The 14 sensors 22 and the compensator 23 for each tank are selected in sequence by a multiplexer 44, which has 16 signal outputs (the 16th will be described later). This multiplexer 44 is also controlled from the microcomputer 25 by means of a strobe line, an enable line, and a 4-bit select bus. Thus any individual sensor 22 or compensator 23 in any tank can be selected for sensing. The multiplexer 44 also has an earth input, and earths the unselected 15 outputs as well as energizing the single selected output.

The sensing is capacitive sensing, and is achieved by feeding an AC signal to the selected sensor, converting the resulting output current to a voltage, processing this voltage, and converting it into digital form. An excitation signal generator 26 is fed with a system clock of 3 MHz and divides this down to an excitation frequency of 18.75 kHz, which is fed through multiplexer 44, the selected sensor, the associated current-to-voltage converter, and the multiplexer 60 to further processing and conversion circuitry 61-71. A switch SW43 is provided at the output of the excitation signal generator 26 so that, if the system includes several channels, with several multiplexers 44, the excitation signal could be removed from a failed multiplexer and applied to another one. The generator 26 includes filtering and voltage limiting circuitry so that it gives a frequency-stable, constant-amplitude sine wave. The switch SW43 may comprise a single chip controlled by the microcomputer 25, or it may comprise a separate chip (or a pair of chips in series) for each section of the switch, so that not all switching capability will be lost in the event of a chip failure.

The excitation signal generator, in addition to feeding the multiplexer 44, also feeds a reference capacitor 42 and a reference resistor 45, which feed 2 further signal inputs of the multiplexer 60 via respective current-to-voltage converters 46 and 50. Also, the 16th output of the multiplexer 44 feeds a load control select circuit 52. This consists basically of 3 stepped pots (potentiometers), fed in parallel from the multiplexer 44, for the $10^4$, $10^3$,

and $10^2$ digits of a load volume to be entered into the system. Each pot consists essentially of 10 equal resistors in series and a manually settable selector which can be set to any junction between the resistors or the earth point at the bottom of the series. The 3 selectors, one from each pot, feed 3 current-to-voltage converters 57 which feed the last 3 of the 8 signal inputs of the multiplexer 60.

The multiplexer 60 feeds a gain scheduled amplifier 61, which is controlled from the microcomputer 25 by means of an enable line, a strobe line, and a 4-bit gain value bus, and which feeds a quadrature filter 66 (also fed from the excitation signal generator 26 via quadrature filter drivers 40) which feeds a null threshold detector 71 via a noise filter 70. The amplifier 61 also feeds a contamination monitor 67. The two circuits 61 and 67 both feed the microcomputer 25.

## Full and Empty Reference Channels

The system operates by selecting a particular sensor or compensator and determining its capacitance by a null method. It is convenient to consider the capacitance of the selected sensor (or compensator) as the sum of two components, the dry (unwetted) value and the additional value due to the fuel present. In balancing the current through the sensor to achieve the null, balancing signals for these two components are generated separately. The excitation signal generator 26 feeds two reference channels, empty reference channel 34 and full reference channel 36, to generate balancing signals for the two components of the sensor signal. These two channels feed the current-to-voltage converters 46, 50, 56L, 56C, 56R, and 57 as shown. These converters also provide isolation between the outputs of the different tanks and other sources feeding the multiplexer 60, and introduce a phase inversion.

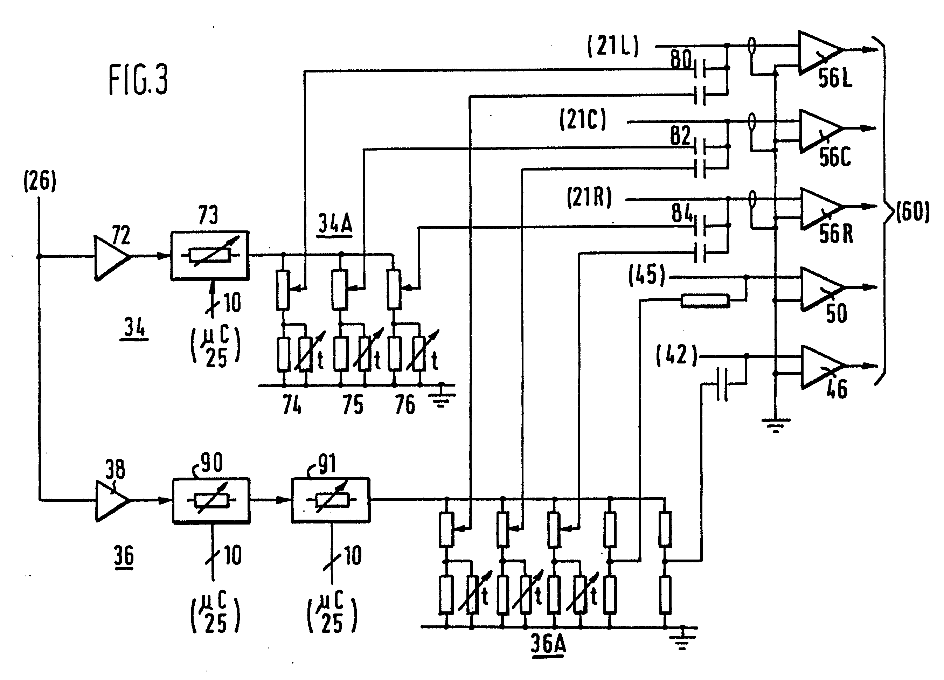

Figure 3 shows these two channels 34 and 36 in greater detail. The empty reference channel 34 includes a digitally controlled attenuator 73, which can be regarded as a set of 10 resistors, each of resistance twice that of the previous resistor in the set. Each resistor is connected in series with a switch, and the 10 resistor-switch circuits are connected in parallel. The attenuator is controlled by a 10-bit signal fed on a 10-bit bus from the microcomputer 25. Thus the attenuator may be controlled to provide an attenuation of n/1024, where n is anything from 0 to 1023. The full reference channel 36 includes two such digitally controlled attenuators, a full set attenuator 90 corresponding to the empty set attenuator 73 and and a rebalance attenuator 91.

The signal from the generator 26 is inverted in the empty channel 34 by an inverter 72, so that its polarity is opposite to that of the signal from the selected sensor and can therefore balance the empty component of that signal. It is then passed through the empty set attenuator 73 to 3 empty suet adjust pots 74, 75, and 76, which feed the 3 current-to-voltage converters 56L, 56C, and 56R. It will be noted that each of these converters has a coaxial cable input, since the line from the tank to the converter may be long, and that the pots 74 to 76 are coupled to these converters through capacitors 80, 82, and 84, corresponding to the fact that the sensors act as capacitors. The converters 50 (as shown in Figure 3) and 57 have resistive coupling, since their primary inputs (from the reference resistor 45 and the load control select circuit 52) are from resistors.

During initial set up of the system, the empty set pot 74 is adjusted to balance the current flowing through the empty reference channel 34 with the current flowing through that one of the 14 sensors 22 of the corresponding tank 21L with the largest unwetted capacitance. The empty set pots 75 and 76 are similarly adjusted for tanks 21C and 21R. The pots 74 and 76 include thermistors as shown to provide compensation for the temperature coefficients of the coupling capacitors 80, 82, and 84.

When the sensor 22 with the largest unwetted capacitance in tank 21L is selected, the attenuator 73 is controlled to give minimum attenuation (1023/1024). For the remaining 13 sensors in the tank, the microcomputer 25 stores the values of the dry capacitances of these probes relative to that probe with the largest dry capacitance, and feeds the corresponding value to the digitally controlled attenuator 73. Thus whichever probe is selected, the dry component of its capacitance is balanced by means of the empty reference channel 34.

The full reference channel 36 is similar to the empty reference channel 34, but includes two digitally controlled attenuators 90 and 91. This channel has to be set up initially, such as the empty reference channel was set up, using the full set attenuator 90 and the pots 36A, and then in operation (measurement of actual fuel) is further controlled by means of the rebalance attenuator 91.

For the initial setting up of channel 36, the pots 36A are adjusted so that, with minimum attenuation by both attenuators 90 and 91, for each tank the sensor with the greatest wetted component of capacitance when the tank is full has that component balanced. The set of pots 36A includes two pots for the reference components, capacitor 42 and resistor 45. For each tank, the microcomputer 25 stores the wetted components of capacitance for the remaining 13 sensors for the tank being full. For any of these remaining 13 sensors, the attenuator 90 is then used to attenuate the signal passing through the full reference channel 36 so as to balance the fully wetted component of the capacitance of that sensor.

(The compensators 23 are treated, for the purposes of measurement of their capacitance, like the sensors 22.)

For measurement of the actual quantity of fuel in a tank, the actual wetted length of each sensor must be determined. Since the sensors are physically uniform along their lengths, this means that the actual wetted component of capacitance must be measured - this is proportional to the wetted length. For this, the attenuator 91 is used to provide additional attenuation, and is adjusted until the output of the relevant current-to-voltage converter is nulled. This can conveniently be achieved by taking the bits of the 10-bit control signal to the attenuator 91 in order of decreasing significance, and setting each in turn.

The full reference channel 36 can be used to make measurements on reference resistor 45 and reference capacitor 42; these measurements are used to monitor system performance. Thus by selecting the reference resistor 45 (by multiplexer 60) and measuring the output by means of the null detector 71, the actual value can be compared with a reference value stored in the microcomputer 25. A deviation from the stored reference value means that the voltage of the excitation signal generator 26 output has shifted from the value for which the stored reference value was set. This gives a primary check of the excitation signal level and a secondary check of the multiplexer 60 and the null detection circuitry 71. Similarly, the extent to which current through the reference capacitor 42 is unbalanced provides a primary check of the frequency of the excitation signal generator 26 and a secondary check of the multiplexer 60 and null detector 71. Also, after a null has been obtained by balancing the signal from the reference resistor 45, the output of the contamination monitor 67 provides a primary check of the contamination monitor 67 and a secondary check of the excitation signal generator 26 output level.

It would be possible to replace the 3-resistor pots 74, etc., by single-resistor pots, but at the loss of accuracy with which they could be set.

The empty reference channel 34 could also be eliminated, but again at the cost of accuracy. Thus this could be done if lower accuracy were acceptable, digitally controlled attenuators with greater accuracy than 10 bits were available (for use in the full reference channel 36), or there were severe limitations of space. The whole capacitance of the sensor would be balanced by means of the full reference channel 36, and the dry component of capacitance of the sensor would be subtracted from the total capacitance by the microcomputer 25.

The dry capacitance components of the sensor do not vary over short periods, but they are affected by manufacturing tolerances on the sensors, possible distortion of the sensors, stray capacitances, etc. Accordingly, it is desirable for the system to determine the dry capacitance components at times such as the initial set up of the system and after overhauls.

Null Sensing Circuitry

The circuitry 61-71 will now be considered. The multiplexer 60 feeds a gain scheduled amplifier 61, which is somewhat similar to the digitally controlled attenuators 73, 90, and 91. Circuit 61 consists in fact of a set of 4 resistors, each with a switch in series with it, with the 4 resistor-switch circuits connected in parallel as the feedback path of an amplifier circuit. Any desired one of the 4 switches may be selected and closed by the microcomputer 25 to cause the signal to pass through the corresponding resistor. The purpose of this circuit is to allow adequate sensitivity to be maintained over the full range. of input signal levels.

Since 1 of 4 resistors is selected in the circuit 61, a 2-bit signal is sufficient to control this circuit. This 2-bit signal is in fact stored in a 2-bit buffer (not shown) interposed between the microcomputer 25 and the circuit 61. Similar buffering may of course be used for other multibit control signals from the microcomputer where desirable.

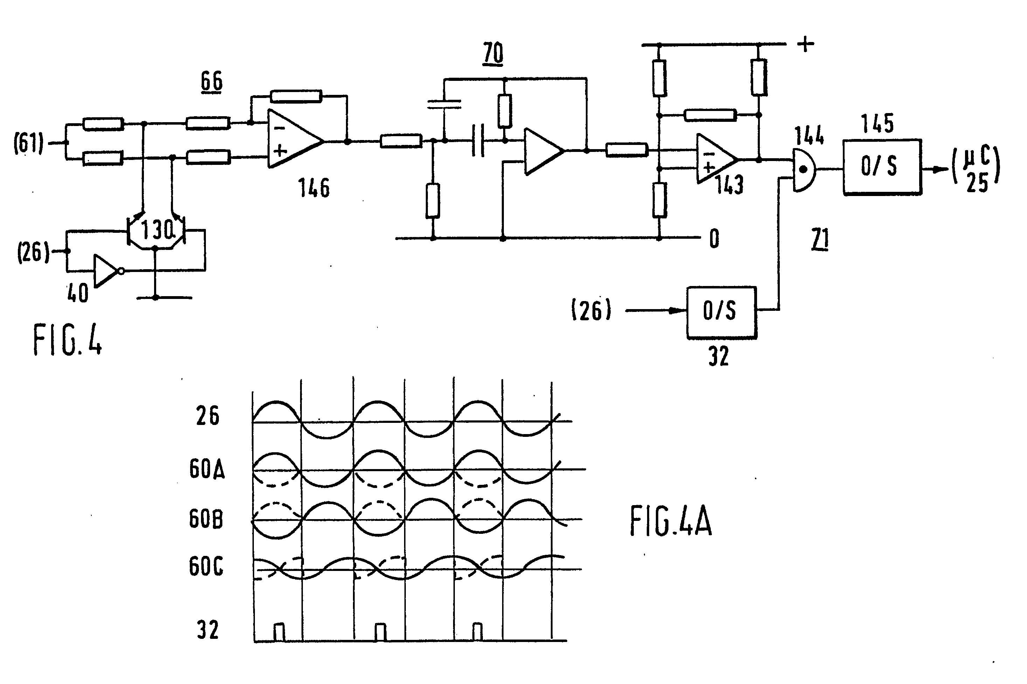

Figure 4 shows the quadrature drivers 40, quadrature filter 66, noise filter 70, and null threshold detector 71. The drivers 40 basically simply generate two switching signals, one in phase with the excitation signal from the generator 26 and the other 180° out of phase. The drivers 40 also include a phase shifting circuit (not shown) which compensates for small phase shifts between the generator 26 and the filters 66. The outputs of drivers 40 control a pair of switching transistors 130, which allow the signal from circuit 61 to pass either to the direct or to the inverting input of an amplifier 146. Thus the circuit 66 has the effect shown in Figure 4A. The top waveform is the excitation signal, and waveforms 60A and 60B show the output of multiplexer 60 when the full reference channel output dominates and the probe signal output dominates respectively. The broken waveforms show the effect of the circuit 66. Waveform 60C shows a resistive current, and the broken parts show the effect of circuit 66 on this.

The circuit 66 feeds a noise filter 70, which is used to filter not only ordinary "electronic" noise but also low frequency fuel-slosh perturbations. It is turned to twice the signal frequency, 37.5 kHz. The amount of filtering that can be used is determined primarily by the system sampling time requirements.

The threshold detector 71 includes a comparator 143 which is fed from the noise filter 70. This comparator is adjusted to produce an output whenever a negative input is received; thus the waveform 60A, broken form, will trigger the comparator 143 at 37.5 kHz. A monostable trigger circuit 32, driven by the generator 26, controls an AND gate 144 fed from the comparator 143. Trigger circuit 32 produces an output pulse at each positive peak of the output of generator 26, as shown in Figure 4A. Hence as long as the input to circuit 71 from the noise filter 70 is negative, pulses will appear from gate 144 at 18.75 kHz. These pulses are fed to a one-shot 145. As long as pulses appear from the gate 144, one-shot 145 will remain triggered. However, if a pulse is not received for 3 cycles of the generator 26, one-shot 145 changes back to bits quiescent state.

The state of one-shot 145 is monitored by the microcomputer 25, which carries out a process of successive approximation to balance the current through the selected sensor 22 with the currents through the full and empty reference channels 34 and 36, as already discussed.

Contamination Monitor 67

The contamination monitor 67 can be used to check two parameters. First, it can be used to determine probe or dielectric sensor contamination. The contamination measurement can be made at two levels, one indicating that the probe or sensor is becoming contaminated but is still usable and the other indicating that the probe or sensor is no longer usable. In addition, contamination monitor 67 can be used in conjunction with reference resistor 45 to determine if the amplitude of the excitation signal provided by excitation generator 26 is above a predetermined level.

Contamination is directly proportional to the dissipation factor, which is the resistive component of the current provided by a probe or dielectric sensor divided by the capacitive component of the current.

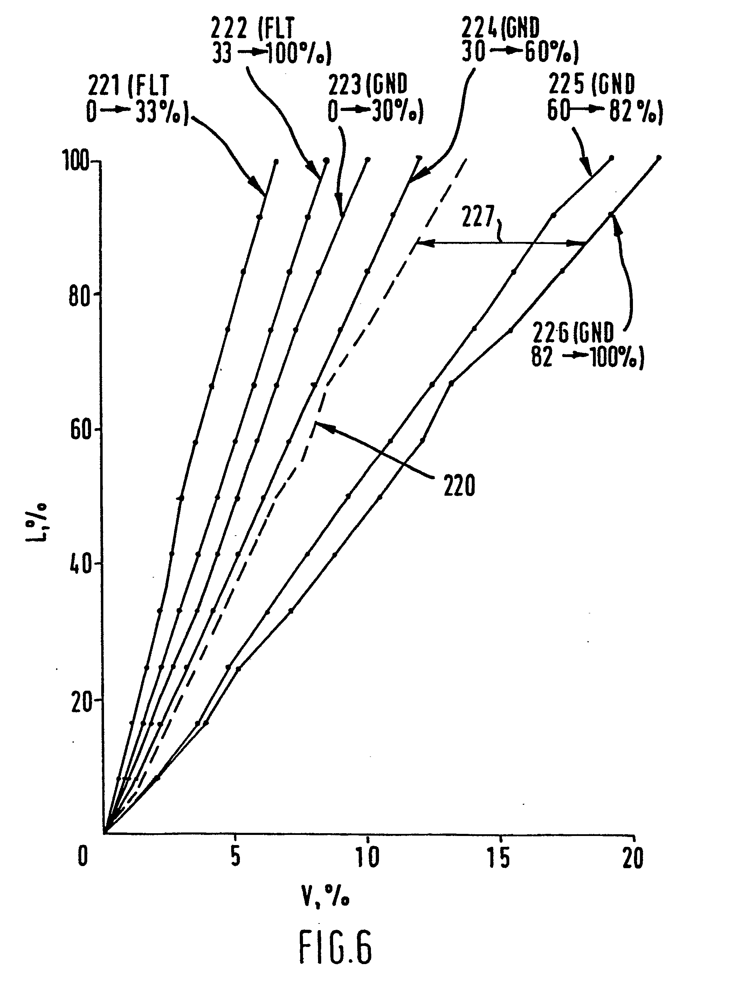

The contamination monitor, as shown in Figure 5, somewhat resembles the null threshold detector 71 in that it includes a comparator 156, an AND gate 157 controlled by the trigger circuit 32, and a one-shot 160. It also includes a switch 122A which connects either the excitation signal generator 26 or the probe signal from circuit 61 to the comparator 156 via a half-wave rectifier circuit 155. The contamination monitor circuit is only used to monitor contamination when the capacitive signal from a probe has been balanced out, so it consists of only the resistive component.

To monitor the generator 26, the level of the excitation signal is compared against the threshold of comparator 156, with the switch 122B in the position shown. To monitor a contamination signal, switch 122A is changed over, and switch 122B is moved to either its outer 2 positions to adjust the threshold level of comparator 156 to whichever of the two levels for monitoring contamination is desired. The switches 122A and 122B are controlled from the microcomputer 25, in the usual way.

Accordingly, reaching a threshold during the measurement of contamination will indicate either that a particular probe of dielectric sensor is becoming contaminated but is still useful or that the probe or sensor is becoming overly contaminated and should no longer be used. As with the threshold measurements discussed in connection with the excitation signal level, a test value related to whether the quadrature signal has an amplitude above the applicable threshold can be then stored in microcomputer 25 for future reference.

Volume Determination

The present system operates primarily to determine the volume of fuel in the tanks. If fuel quantity by weight is required, fuel density may be determined from the dielectric constant of the fuel, as measured by means of the compensators 23, or by means of a density sensor.

To determine fuel volume, the measured wet component of the capacitance of each probe is measured, as described above, and then converted by the microcomputer 25 into a corresponding fractional wetted length of the probe, using the measured value of the dielectric constant as obtained with the aid of the compensator 23 for the relevant tank. Thus the fractional wetted lengths of the probes of each tank are determined.

During the design of the system, an analysis of the geometry of the tanks is carried out in order to select a good set of locations for the probes in each tank, so that all probes will contribute more or less equally to the determination of liquid volume.

For the present system, a liquid height against volume study is performed, either by theoretical means using the known geometry of the tanks and plcaements of the probes or by experiment by adding known volumes of liquid to the tank, to determine for each probe the relationship between the fractional wetted length and the volume of liquid which that length represents. Each tank is notionally divided into 14 sections, one per sensor, and the volume of liquid in each such notional section is determined with the aid of the respective sensor.

For each sensor, the full length is notionally divided into a fixed number of equal segments, and the volume increment of the notional section of that sensor due to a level rise through she length of each segment is stored in memory in the microcomputer 25. That is, for each sensor, the microcomputer 25 stores a table with n entries, where n is the number of segments for that sensor, and the value of each entry is the volume increment in the corresponding notional section of the tank. The microcomputer 25 also includes a program which adds up the volumes of the segments containing fuel, as determined by the wetted length of the sensor, using simple interpolation for a partially filled segment.

Thus each notional section of the tank has its volume of fuel determined with the aid of the measurement of the capacitance of the associated sensor. The fuel volumes for the 14 notional sections are then added together to obtain the total fuel volume in the tank. The same process is carried out for all 3 tanks.

The correlation or function connecting the volume of fuel in the notional section of the tank and the wetted length of the sensor is known as the characterization. As noted at the beginning, it has been known to achieve physical characterization by suitable shaping of the plates of a capacitance sensor. In the present system, the characterization is achieved by means of the stored table for each sensor.

In the present system, it is possible to have multiple characterization for the sensors. That is, several tables can be stored for each sensor, with the selection of table being determined by such matters as the orientation or attitude of the liquid in the tank. Thus the orientation or attitude of the aircraft, whether the aircraft is on the ground or in the air, and accelerational forces on the aircraft can be taken into account. In addition, multiple characterization of the probes in dependence on the total quantity of fuel in the tanks may be employed.

Such multiple characterization may be understood by referring to Figure 6, in which the vertical axis shows 0% to 100% of probe wetted sensing length and the horizontal axis shows percent of total tank volume. The dotted plot 220 represents a fixed characterization probe typical of the prior art. The six solid plots, 221 to 226, are six characterizations for a single probe. Of the six characterizations, 221 and 222 cover aircraft flight conditions with characterization 221 covering 0 to 33% of full tank volume and characterization 222 covering 33 to 100% of full tank volume. Characterizations 223 to 226 cover aircraft ground conditions with characterization 223 covering 0 to 30% of full tank volume, 224 covering 30 to 60%, 225 covering 60 to 82%, and 226 covering 82 to 100% of full tank volume. Since a tank unit having a fixed characterization 220 is limited to a "best fit" of the multiple characterization 221 to 226, the resultant error 227 can be substantial.

For each characterization 221 to 226, a set of points from unwetted (0% wetted sensing length) to completely wetted (100% wetted sensing length) are stored as a set in a microcomputer memory lookup table. For wetted sensing lengths between the 12 points, an interpolation is made. A 16-bit interpolation measurement provides an effective 0.025% interpolation accuracy.

As can be seen from Figure 6, each of the characterizations 221 to 226 covers the full wetted sensing length (0 to 100%) of the particular probe being characterized. As can also be seen, each characterization covers only a predetermined range of total tank volume.

Either flight or ground characterization is selected through aircraft air/ground relay 28. It should also be noted that such use of flight or ground characterization is only one of many possibilities of monitoring a physical condition related to an orientation that the liquid occupies in the tanks (in an aircraft, the shape and orientation of, for example, the wing tanks is affected by whether the aircraft is in the air or on the ground.)

In addition, each lookup table comprising a particular characterization has a range of data meeting system accuracy specifications as well as data outside the specified range. Thus, once either flight or ground characterization is selected and computation is in progress, table selections may be based on previously computed volumes. If the last computed volume is beyond the accuracy range of the selected characterization, the proper characterization (the proper lookup table) is selected for the next computation. If there has not been a previously computed volume (e.g., after powerup) a default table is selected for the first computation.

Lost Probe Recovery

If a fault is detected on a probe 22 or other sensor (e.g. a capacitive probe having zero capacitance or becoming overly contaminated and no longer useful), it is possible with the present system to recover a significant portion of the error that would normally be introduced by loss of the sensor. As can be noted in Figure 6, the additional error caused by a lost probe begins when the probe is first wetted and increases to a maximum when the probe is totally immersed. The maximum additional error that results is equal to the percentage of the full tank liquid volume corresponding to the probe characterization which is operative. For characterization 221-226 plotted on Figure 6, the maximum error can be seen to range from approximately 5 to 20%.

In the present system, however, recovery from a lost probe can be relatively simple. For each probe in a tank, one or more sister probes may be utilized to estimate the wetted sensing length of a failed probe. Various techniques are made possible in thee present system because individual wetted sensing lengths are known for all good probes.

As an example of a preferred approach to lost probe recovery in the present system two sister probes, S1 and S2, are identified for each probe in a tank. The two sister probes are used in estimating the failed probe's wetted sensing length through the wetted sensing lengths of the two sister probes. With the length and wetted sensing length (WSL) of each probe available from microcomputer 25, the estimated wetted sensing length of the lost probe can then be calculated by a linear interpolation technique.

More sophisticated methods are possible. For example, three sister probes that are partially wetted may be used to define a plane through three wetted sensing points. The estimated wetted sensing length for a failed probe can then be found as the intersection of the probe with the previously defined plane.

System Executive

The microcomputer 25 includes system software which controls program sequence by considering logic conditions determined previously and initiating required operations.

Upon application of power, a microcomputer reset signal forces a program counter to a specific location from which a power on initialization sequence begins. Upon completion of system initialization, the system is placed in a fuel weight computation mode and fuel weight computation begins for each tank. After all tank computations have been made, indicators may be updated by a display program.

Computation of the percentage of total tank volume measured by each probe has already been discussed. As was previously indicated, each probe 22 is divided into theoretical segments. As was also previously indicated, volumes (expressed as a percent of total tank volume) corresponding to each section are stored in lookup tables in memory, there being for each probe a lookup table for each characterization such as 221 to 226.

During the process of determining the percentage of total tank volume measured by each probe, the wetted sensing length of each probe is computed (as was previously indicated under the discussion of probes 22) from the measured capacitance added to the probe by the fuel and from the dielectric constant of the fuel. With reference to the computed wetted sensing length for a particular probe, the segment wetted section lengths are then summed, and corresponding section volumes are summed.

When a total of segment wetted sensing lengths exceed the computed wetted sensing lengths for a probe, an interpolation is made to find the wetted sensing length of a partiallly wetted section. The interpolation factor is applied to the corresponding section volume in order to determine the corresponding partial section volume attributable to the partially wetted section. The partial section volume is then added to the previous sum in order to arrive at the total tank volume contribution corresponding to the particular probe. After filtering, each probe volume is then added to find total tank volume.

Because tank volume computed at this point is a percentage of full tank volume, actual fuel volume is computed by multiplying the percentage of full tank volume by the maximum tank volume. Total fuel weight may then be computed by multiplying fuel volume by the density.

Filtering

In the present system, software may be used to filter individual probe 22 readings, fuel weight values, and display values. Individual probe 22 readings may be averaged with an average of previous readings for that probe. This running average helps smooth out extreme readings that can result from such things as fuel slosh.

Fuel weight values may be filtered by using a weighted average. For example, a new fuel weight may be given a weighting factor of 0.25, and the old fuel weight may be given a weighting factor of 0.75. Adding these two quantities will give a weighted average for the fuel weight that approximates a filter with a 3.5 s time constant. This value may then be processed through an algorithm to prevent least significant bit flicker on a display. This smoothed value becomes the displayed value and the old fuel weight value.

**Claims**

1. A liquid gauging system comprising a tank (21L) having therein a plurality of capacitive sensors (22) responsive to the wetted length of the sensors and an additional capacitive sensor (23) being a dielectric compensator characterised by means (MUX 44, MUX 60) for sensing the wetted length of each sensor (22) individually, means (25) for determining for each sensor (22) a corresponding partial volume of liquid in dependence on the wetted length of that sensor, and means (25) for adding the partial volumes.

2. A system according to Claim 1, characterised by means (25) for determining when a sensor fails, and means (25) for thereafter calculating a liquid level for that sensor in dependence on the levels sensed by at least one adjacent sensor.

3. A system according to either previous claim, characterised by data storage means (25) for storing a table of liquid volumes corresponding to predetermined wetted lengths, and means (25) for calculating the liquid volume corresponding to a sensed wetted length by interpolation from the volume for the adjacent lengths stored in the table.

4. A system according to Claim 3, characterised in that the storage means (25) stores a plurality of tables, and including table selection means (25) for selecting one of the tables in dependence on the general conditions of the tank.

5. A system according to Claim 4, characterised in that the table selection means (25) is responsive to the orientation of the tank.

6. A system according to either of Claims 4 and 5, characterised in that the table selection means is responsive to the total volume of liquid in the tank.

7. A liquid gauging system according to any previous claim, characterised by means (26) for energizing the sensors, means (34, 36) for generating a signal of known amplitude which nulls the capacitive component of the signal from the sensor means, and means (67) for measuring the quadrature (resistive) component of the sensor signal when the capacitive component has been nulled.

8. A liquid gauging system according to any previous claim, characterised by said energizing means (26) for energizing the sensors (22, 23), means (61-71) for measuring the signal from the sensors, a precision reference component (42, 45) fed from the energizing means, and means (61-71) for measuring the signal from the precision reference component.

9. A liquid gauging system according to any one of Claims 1 to 6, characterised by energizing means (26) for energizing the sensors (22, 23), means (61-71) for measuring the signal from the sensors, means (25) for storing the value of that signal when the tank is empty, and empty reference means (34) for applying in opposition to the sensor signal a signal corresponding to the sensor signal when the tank is empty.

## Revendications

1. Système de mesure de liquide, comprenant un réservoir (21) ayant à l'intérieur une pluralité de capteurs capacitifs (22) sensibles à la longueur mouillée des capteurs et un capteur capacitif supplémentaire (23) qui est un compensateur diélectrique, caractérisé par des moyens (MUX 44, MUX 60) pour mesurer individuellement la longueur mouillée de chaque capteur (22), un moyen (25) pour déterminer, pour chaque capteur (22), un volume partiel correspondant de liquide en fonction de la longueur mouillée de ce capteur, et un moyen (25) pour additionner les volumes partiels.

2. Système selon la revendication 1, caractérisé par un moyen (25) pour déterminer quand un capteur est défaillant, et un moyen (25) pour calculer ensuite un niveau de liquide pour ce capteur en fonction des niveaux mesurés par au moins un capteur adjacent.

3. Système selon l'une quelconque des revendications précédentes, caractérisé par un moyen de stockage de données (25) pour stocker un tableau de volume de liquide correspondant à des longueurs mouillées prédéterminées et un moyen (25) pour calculer le volume de liquide correspondant à une longueur mouillée mesurée, par interpolation à partir du volume pour les longueurs adjacentes stockées dans le tableau.

4. Système selon la revendication 3, caractérisé en ce que le moyen de stockage (25) stocke une pluralité de tableaux, et comprenant un moyen de choix de tableau (25) pour choisir l'un des tableaux en fonction des conditions générales du réservoir.

5. Système selon la revendication 4, caractérisé en ce que le moyen de choix de tableau (25) dépend de l'orientation du réservoir.

6. Système selon la revendication 4 ou 5, caractérisé en ce que le moyen de choix de tableau (25) dépend du volume total de liquide dans le réservoir.

7. Système de mesure de liquide selon l'une quelconque des revendications précédentes, caractérisé par un moyen (26) d'excitation des capteurs, un moyen (34, 36) pour engendrer un signal d'amplitude connue qui annule la composante capacitive du signal issu du moyen capteur, et un moyen (67) pour mesurer la composante (résistive) en quadrature du signal du capteur quand la composante capacitive a été annulée.

8. Système de mesure de liquide selon l'une quelconque des revendications précédentes, caractérisé par lesdits moyens d'excitation (26) pour exciter les capteurs (22, 23), un moyen (61-71) pour mesurer le signal issu des capteurs, un composant de référence de précision (42, 45) alimenté par le moyen d'excitation, et un moyen (61-71) pour mesurer le signal issu du composant de référence de précision.

9. Système de mesure de liquide selon l'une quelconque des revendications 1 à 6, caractérisé par un moyen d'excitation (26) pour exciter les capteurs (22, 23), un moyen (61-71) pour mesurer le signal issu des capteurs, un moyen (25) pour stocker la valeur de ce signal quand le réservoir est vide, et un moyen de référence à vide (34) pour appliquer, en opposition au signal du capteur, un signal correspondant au signal du capteur quand le réservoir est vide.

## Patentansprüche

1. Flüssigkeits-Meßsystem mit einem Tank (21L) und mehreren darin befindlichen kapazitiven Fühlern (22), die auf die benetzte Fühlerlänge ansprechen und mit einem zusätzlichen kapazitiven Fühler (23) als dielektrischem Kompensator, **gekennzeichnet durch** Einrichtungen (MUX 44, MUX 60) zum Abfühlen der benetzten Länge eines jeden einzelnen Fühlers (22), eine Einrichtung (25) zur Bestimmung eines entsprechenden Teilvolumens der Flüssigkeit für jeden Fühler (22) in Abhängigkeit von der benetzten Länge dieses Fühlers und eine Einrichtung (25) zur Addition der Teilvolumina.

2. System nach Anspruch 1, **gekennzeichnet durch** eine Einrichtung (25) zur Bestimmung eines Fühler-Ausfalles und eine Einrichtung (25) zur nachfolgenden Berechnung eines Flüssigkeitspegels für diesen Fühler in Abhängigkeit von den Pegeln, die durch wenigstens einen benachbarten Fühler erfaßt werden.

3. System nach einem vorhergehenden Anspruch, **gekennzeichnet durch** eine Datenspeichereinrichtung (25) zur Speicherung einer Tabelle von Flüssigkeitvolumen entsprechend vorbestimmter benetzter Längen und eine Einrichtung (25) zur Berechnung des Flüssigkeitsvolumens entsprechend einer gefühlten benetzten Länge durch Interpolation des Volumens für benachbarte in der Tabelle gespeicherte Längen.

4. System nach Anspruch 3, **dadurch gekennzeichnet,** daß die Speichereinrichtung (25) mehrere Tabellen speichert und eine Tabellen-Auswanleinrichtung (25) aufweist, um eine Tabelle in Abhängigkeit von den allgemeinen Zuständen des Tanks auszuwählen.

5. System nach Anspruch 4, **dadurch gekennzeichnet,** daß die Tabellen-Auswanleinrichtung (25) auf die Ausrichtung des Tanks anspricht.

6. System nach einem der Ansprüche 4 und 5, **dadurch gekennzeichnet,** daß die Tabellen-Auwahleinrichtung auf das Gesamtvolumen der Flüssigkeit in dem Tank anspricht.

7. Flüssigkeits-Meßsystem nach irgendeinem vorhergehenden Anspruch, **gekennzeichnet durch** eine Einrichtung (26) zur Speisung der Fühler, eine Einrichtung (34,36) zur Erzeugung eines Signales bekannter Amplitude zum Nullabgleich der kapazitiven Komponente des Signales des Fühlers und eine Einrichtung (67) zur Messung der (Widerstands) Quadraturkomponente des Fühlersignales nach Nullabgleich der kapazitiven Komponente.

8. Flüssigkeits-Meßsystem nach einem vorhergehenden Anspruch, **gekennzeichnet durch** die genannte Speiseeinrichtung (26) für die Speisung der Fühler (22,23), eine Einrichtung (61-71) zur Messung der Fühlersignale, eine von der Speiseeinrichtung gespeiste Präzisions-Referenzkomponente (42,45) und eine Einrichtung (61-71) zur Messung des Signals der Präzisions-Referenzkomponente.

9. Flüssigkeits-Meßsystem nach einem der Ansprüche 1 bis 6, **gekennzeichnet durch** eine Speiseeinrichtung (26) für die Speisung der Fühler (22,23), eine Einrichtung (61-71) zum Messen der Fühlersignale, eine Einrichtung (25) zur Speicherung des Wertes des Fühlersignales wenn der Tank leer ist und eine Leer-Referenzeinrichtung (34) zur Zuführung eines Signales anstatt des Fühlersignales entsprechend einem Fühlersignal bei leerem Tank.

FIG.1

FIG.5

FIG.2

EP 0 040 107 B1

FIG.3

FIG.4

FIG.4A

EP 0 040 107 B1

FIG.6